# EUROPEAN PATENT APPLICATION

(11) **EP 3 819 707 A1**
(43) Date of publication of application: **12.05.2021**
(21) Application number: 19830736.5
(22) Date of filing: 20.05.2019
(51) Int. Cl.: G03B 17/12, G03B 15/03

(54) **PORTABLE IMAGING MODULE**

(30) Priority: 02.07.2018 CN 201810720674
(71) Applicant: Convergence Technology Co. Ltd., Wuhan, Hubei 430074 (CN)
(72) Inventor: HU, Qinglei, Wuhan, Hubei 430074 (CN); HUANG, Kai, Wuhan, Hubei 430074 (CN); LI, Ning, Wuhan, Hubei 430074 (CN); LI, Yawu, Wuhan, Hubei 430074 (CN); LI, Mengting, Wuhan, Hubei 430074 (CN)
(74) Representative: Niburska, Danuta
(86) International application number: PCT/CN2019/087519
(87) International publication number: WO 2020/007131

(57) **Abstract**

Disclosed in the present invention is a portable imaging module that is detachably connected to a portable imaging device (3) which has a camera (31) and an illuminator (32), and that is characterized in: comprising a lens (1) and a lens body (2), wherein the lens (1) is at least partially mounted in a mounting hole (21) of the lens body (2); the lens (1) comprises a lens (11) and a lens package (12); the lens (1) faces a camera (31) mounted on the portable imaging device (3); the lens body (2) is made from a transparent or translucent solid material, one end part thereof is configured with a reflective end (22), and a projection area projected by the reflective end (22) onto a mounting surface of the portable imaging device (3) at least partially covers the illuminator (32). By means of the re-optimized design of the structure, the imaging module is compact, light, convenient, easy to use, and has high image quality and large magnifying power.

## Description

The disclosure relates to the technical field of imaging, and more particularly to a portable imaging module.

An external lens can improve the imaging ability of the camera of a mobile phone or other portable devices, which has been widely used in the fields of parts detection, medical detection, jewelry detection, mineral detection and the like. However, the following disadvantages are associated with conventional external lenses:
1. Conventional external lenses of mobile phones usually use a single lens. The numerical aperture (NA) of the lens is limited (NA < 0.1) and the image quality is poor, especially the image quality of the off-axis point in the field of view is much worse than the diffraction limit, and there is a large color difference.
2. Conventional external lenses of mobile phones usually have a small magnification, which is effective in observing relatively macro samples, but is helpless for micro samples (such as 10 micron or even few micron); the reason for the small magnification is that the focal length of the lens is long, so that the lens is bulky and not easy to carry.
3. An imaging system usually needs to be equipped with a light device. To meet the requirements of lighting, conventional external lenses of mobile phones are usually equipped with an independent LED lighting device. On the one hand, the independent LED lighting device needs power, so the battery life must be taken into account; on the other hand, the additional lighting device and power supply make the lens bulkier, thus increasing the carrying difficulty.

In view of the above defects in the relater art, the disclosure provides a portable imaging module. The imaging module is small, light, convenient, easy to use, and has high imaging quality and large magnification, which is especially suitable for use as an enhancement imaging module of mobile electronic imaging devices such as mobile phones.

The disclosure provides a portable imaging module detachably connected to a portable imaging device comprising a camera and an illuminator. The portable imaging module comprises a lens assembly and a lens body; the lens body comprises a mounting hole, and the lens assembly is at least partially disposed in the mounting hole.

The lens assembly comprises a lens and a lens enclosure; the lens assembly is disposed on the portable imaging device and is in front of the camera of the portable imaging device.

The lens body comprises transparent or semitransparent solid material; one end of the lens body comprises a reflecting end; a projection area of the reflecting end on a mounting surface of the portable imaging device at least partially covers the illuminator.

Preferably, the reflecting end comprises an inclined edge with respect to the mounting surface of the portable imaging device or an arc surface.

Preferably, the projection area of the reflecting end on the mounting surface of the portable imaging device is a vertical strip.

Preferably, the projection area of the reflecting end on the mounting surface of the portable imaging device is an inclined straight strip.

Preferably, the lens body comprises a first reflecting end and a second reflecting end disposed on two ends of the lens body, respectively; distances between the two reflecting ends, and the lens assembly are mutually different.

Preferably, two inclined straight strips which are projection areas of the two reflecting ends on the mounting surface of the portable imaging device are splayed.

Preferably, the projection area of the reflecting end on the mounting surface of the portable imaging device is an arc-shaped strip.

Preferably, the projection area of the reflecting end on the mounting surface of the portable imaging device is a horizontal strip, and an extended line of the horizontal strip passes through the lens assembly.

Preferably, the lens body comprises two retractable parts, and the lens assembly and the reflecting end are respectively disposed on the two retractable parts.

Preferably, the lens body comprises a specular reflection enhancement layer or diffuse reflection enhancement layer; the specular reflection enhancement layer or diffuse reflection enhancement layer is at least disposed on the reflecting end; and the specular reflection enhancement layer or diffuse reflection enhancement layer is further disposed at least on part of other regions of the lens body.

The above preferred technical features can be combined with each other as long as they do not conflict with each other.

The following advantages are associated with the portable imaging module of the disclosure:
1. The portable imaging module of the disclosure involves no independent light source. Through the light guide cavity of the lens body, especially the reflecting end, the light emitted by the portable imaging device is reflected, refracted, and scattered to form illumination light in the lens accessories, thereby meeting the lighting demand, and reducing the size of the imaging module, so the imaging module is portable.
2. Because the size of the imaging module is reduced, the focal length of the lens is smaller and the magnification is larger, which can be used for micro imaging.
3. The various shapes of the lens body and the reflecting end can adapt to various distances and positions of the lens and the illuminator of different models and specifications of portable imaging devices, thus improving the universality and adaptability of the portable imaging module; at the same time, the illuminator can input the most first illumination light into the lens body and output the most second illumination light each time, thus improving the imaging quality of the portable imaging module.

FIG. 1 is a schematic diagram of a portable imaging module according to one embodiment of the disclosure;
FIG. 2 is a sectional view taken from line A-A in FIG. 1;
FIG. 3 shows a combination of a portable imaging module of the disclosure and a portable imaging device;
FIG. 4 is a sectional view taken from line B-B in FIG. 3;
FIG. 5 shows a lens body of the disclosure for light guiding;
FIG. 6 is a schematic diagram of a lens body according to a first embodiment of the disclosure;
FIG. 7 is a light reflection diagram of a lens body according to one embodiment of the disclosure;
FIG. 8 is a schematic diagram of a lens body according to a second embodiment of the disclosure;
FIG. 9 is a schematic diagram of a lens body according to a third embodiment of the disclosure;
FIG. 10 is a schematic diagram of a lens body according to a fourth embodiment of the disclosure;
FIG. 11 is a schematic diagram of a lens body according to a fifth embodiment of the disclosure; and
FIG. 12 shows three kinds of reflecting ends of the disclosure.

To further illustrate the disclosure, embodiments detailing a portable imaging module are described below. It should be noted that the following embodiments are intended to describe and not limit disclosure.

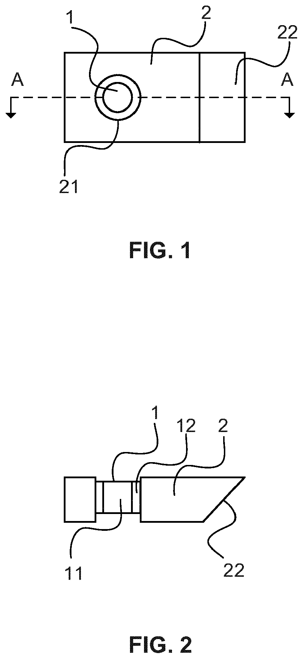

As shown in FIGS. 1-12, the disclosure provides a portable imaging module detachably connected to a portable imaging device 3, such as a mobile phone, a tablet PC, etc. The portable imaging device comprises a camera 31 and an illuminator 32. The illuminator 32 includes but is not limited to a flash lamp and a fill lamp. The portable imaging module comprises a lens assembly 1 and a lens body 2. The lens body comprises a mounting hole 21, and the lens assembly 1 is at least partially disposed in the mounting hole 21 (through hole, counterbore, threaded hole or other special-shaped holes) of the lens body 2.

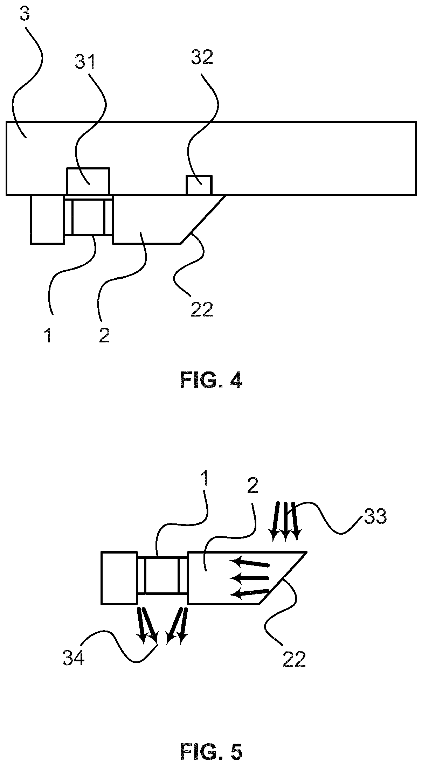

As shown in FIGS. 1-4, the lens assembly 1 comprises a lens 11 and a lens enclosure 12. The lens 11 in the lens assembly 1 is a spherical lens or an aspheric lens, and is a single lens or a lens group comprising a plurality of lenses. Preferably, the lens assembly 1 comprises an aspheric lens and a lens group comprising a plurality of lenses. The lens enclosure 12 provides mechanical package for the lens assembly 1. The lens assembly 1 is disposed on the portable imaging device 3 and is in front of the camera 31 of the portable imaging device 3. As shown in FIG. 4, the portable imaging module of the disclosure is attached to the mounting surface, that is, the back surface of the portable imaging device 3.

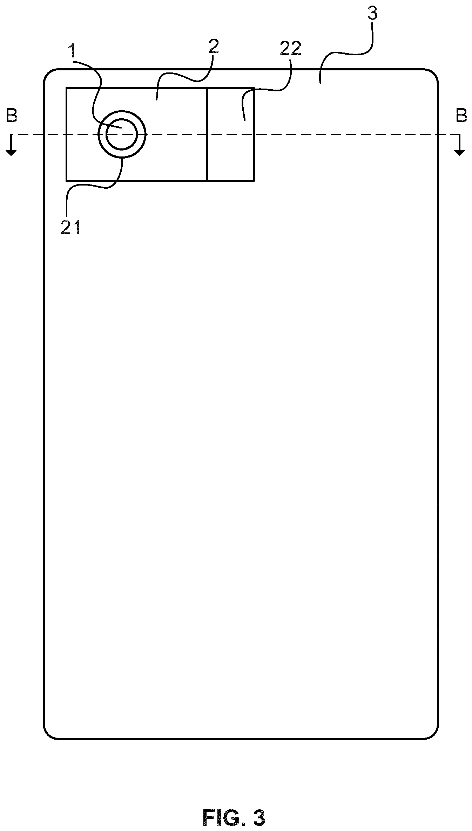

As shown in FIGS. 3-5, the lens body 2 comprises transparent or semitransparent solid material. One end of the lens body functions as a reflecting end 22. The projection area of the reflecting end 22 on the mounting surface of the portable imaging device 3 at least partially covers the illuminator 32. The lens body 2 functions as a mechanical support and a light guide at the same time. The light guiding function of the lens body 2 is to guide the light emitted by the illuminator 32 (such as a flash lamp) on the portable imaging device 3 to the object to be imaged by the lens assembly 1.

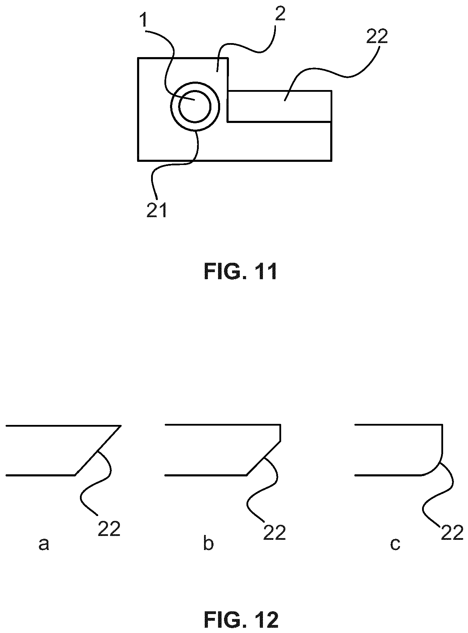

The reflecting end 22 comprises an inclined edge (as shown in a and b of FIG. 12) with respect to the mounting surface of the portable imaging device or an arc surface (as shown in c of FIG. 12). Preferably, the reflecting end 22 comprises an inclined edge, and the included angle between the inclined edge and the mounting surface is 45°.

The reflecting end of the disclosure presents in different forms. For example, the projection area of the reflecting end 22 on the mounting surface of the portable imaging device 3 is a vertical strip, as shown in FIGS. 1-5.

When in use, the portable imaging module is closely attached to the body of the portable imaging device 3, and the lens assembly 1 is aligned with the camera 31 of the portable imaging device 3. The inclined edge of the reflecting end covers the illuminator 32. As shown in FIG. 5, the first illumination light 33 emitted by the illuminator 32 is reflected by the reflecting end 22 of the lens body 2. Because the lens body 2 is made of transparent or semitransparent material, its interior is equivalent to a cavity. The light propagates in the cavity, and is reflected, refracted and scattered on the walls of the lens body, and finally forms a second illumination light 34 in the vicinity of the lens assembly 1 of the disclosure.

The distance and positional relationship between the camera 31 and the illuminator 32 of the portable imaging device 3 of different models and specifications are various, and the position of the reflecting end 22 of the disclosure on the portable imaging device 3 can be adjusted to adapt to the distance and positional relationship of the camera and the illuminator. In operation, rotate the lens body 2 with the lens assembly 1 as the axis, so that the reflecting end 22 is aligned with the illuminator 32 of the portable imaging device 3.

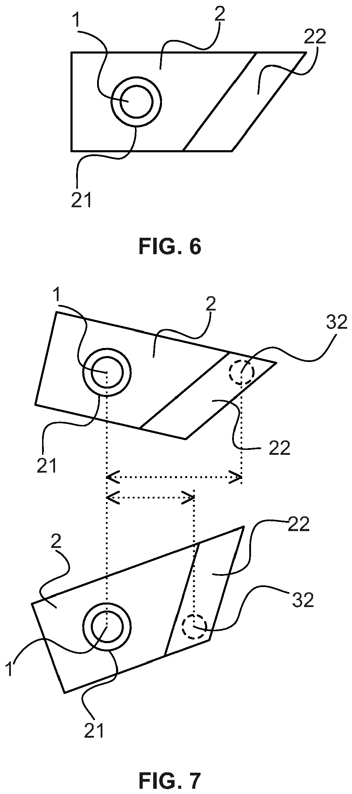

To improve the adaptability, the shape of the lens body 2 is adjustable to conveniently change the distance between the lens assembly 1 and the reflecting end 22. In one embodiment, as shown in FIGS. 6-7, the projection area of the reflecting end 22 on the mounting surface of the portable imaging device 3 is an inclined straight strip, thus increasing the length of the reflecting end 22. In this way, a specific lens body is selected to adapt to the minimum distance and the maximum distance between the camera 31 and the illuminator 32, thus adapting to different portable imaging devices 3, so that the reflecting end 22 is aligned with the illuminator 32, thus improving the universality and adaptability of the lens body. Thus, the illuminator 32 can input the most first illumination light 33 into the lens body 2 and output the most second illumination light 34, so as to improve the imaging quality.

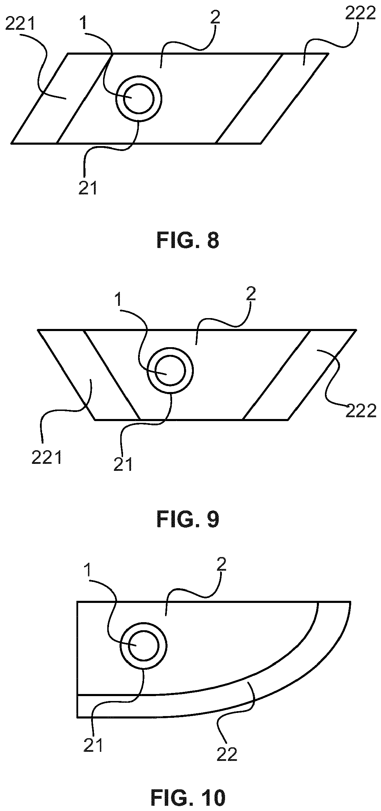

As shown in FIG. 8, as another embodiment of the reflecting end 22, the lens body 2 comprises a first reflecting end 221 and a second reflecting end 222 disposed on two ends of the lens body, respectively. The distances between the two reflecting ends 221, 222 and the lens assembly 1 are mutually different. Like the structure in FIG. 7, the distance between the reflecting end on each end of the lens body and the lens assembly is adjustable. Thus, the lens body has two adjustment ranges of the distance. Through changing the distances between the two reflecting ends and the lens assembly, the two adjustment ranges are in a gradient distribution or continuous distribution, ensuring a larger adjustment range, which further improves the versatility, adaptability and imaging quality of the portable imaging module.

In FIG. 8, the inclined straight strips of the projection areas of the two reflecting ends are preferably parallel to each other. If the two reflecting ends rotate anticlockwise, the first reflecting end 221 operates from a minimum distance to a maximum distance with the lens assembly, and then the second reflecting end 222 operates from a minimum distance (greater than or equal to the maximum distance of the first reflecting end 221) to a maximum distance with the lens assembly. Thus, the lens body has four adjustment options. As shown in FIG. 9, in another embodiment, the two inclined straight strips which are the projections of the two reflecting ends on the mounting surface of the portable imaging device 3 are splayed, thus increasing the adjustment options of the distances and further improving the versatility, adaptability and imaging quality of the portable imaging module.

As shown in FIG. 10, the projection area of the reflecting end 22 on the mounting surface of the portable imaging device 3 is an arc-shaped strip. The strip extends from the one end of the lens body 2 to the center part, and the distance is continuously adjustable, covering as many light receiving areas as possible of the lens assembly 1.

As shown in FIG. 11, the projection area of the reflecting end 22 on the mounting surface of the portable imaging device 3 is a horizontal strip, and the extended line of the horizontal strip passes through the lens assembly 1. The far end and the near end of the horizontal strip correspond to the maximum distance and the minimum distance, respectively, and the 45° edge with respect to the mounting surface makes more reflected light direct to the lens assembly, which further improves the versatility, adaptability and imaging quality of the portable imaging module.

The lens body 2 comprises two retractable parts, and the lens assembly 1 and the reflecting end 22 are respectively disposed on the two retractable parts. The telescopic structure can be used alone to adapt to different portable imaging devices, and can also be used with various shapes of the reflecting ends 22.

The lens body 2 comprises a specular reflection enhancement layer or diffuse reflection enhancement layer. The specular reflection enhancement layer or diffuse reflection enhancement layer is at least disposed on the reflecting end 22. Optionally, the specular reflection enhancement layer or diffuse reflection enhancement layer is further disposed at least on part of other regions of the lens body. The enhancement layer is, for example, a reflection film, a reflection strip, or a reflection paste, which can enhance the intensity of the second illumination light 34, thereby improving the imaging quality of the portable imaging module.

The portable imaging module of the disclosure involves no independent light source. Through the light guide cavity of the lens body, especially the reflecting end, the light emitted by the portable imaging device is reflected, refracted, and scattered to form illumination light in the lens accessories, thereby meeting the lighting demand, and reducing the size of the imaging module, so the imaging module is portable. After the size of the imaging module is reduced, the focal length of the lens is smaller and the magnification is larger, which can be used for micro imaging. The various shapes of the lens body and the reflecting end can adapt to various distances and positions of the lens and the illuminator of different models and specifications of portable imaging devices, thus improving the universality and adaptability of the portable imaging module; at the same time, the illuminator can input the most first illumination light into the lens body and output the most second illumination light each time, thus improving the imaging quality of the portable imaging module.

It would be obvious to those skilled in the arts that changes and modifications may be made; therefore, the aim of the appended claims is to cover all such changes and modifications.

## Claims

1. A portable imaging module detachably connected to a portable imaging device (3) comprising a camera (31) and an illuminator (32), the portable imaging module comprising a lens assembly (1) and a lens body (2); the lens body comprising a mounting hole (21), and the lens assembly (1) being at least partially disposed in the mounting hole (21); wherein:
the lens assembly (1) comprises a lens (11) and a lens enclosure (12); the lens assembly (1) is disposed on the portable imaging device (3) and is in front of the camera (31) of the portable imaging device (3); and
the lens body (2) comprises transparent or semitransparent solid material; one end of the lens body comprises a reflecting end (22); a projection area of the reflecting end (22) on a mounting surface of the portable imaging device (3) at least partially covers the illuminator (32).

2. The portable imaging module of claim 1, wherein the reflecting end (22) comprises an inclined edge with respect to the mounting surface of the portable imaging device or an arc surface.

3. The portable imaging module of claim 1 or 2, wherein the projection area of the reflecting end (22) on the mounting surface of the portable imaging device (3) is a vertical strip.

4. The portable imaging module of claim 1 or 2, wherein the projection area of the reflecting end (22) on the mounting surface of the portable imaging device (3) is an inclined straight strip.

5. The portable imaging module of claim 4, wherein the lens body (2) comprises a first reflecting end and a second reflecting end disposed on two ends of the lens body, respectively; distances between the two reflecting ends (22) and the lens assembly (1) are mutually different.

6. The portable imaging module of claim 5, wherein two inclined straight strips which are projection areas of the two reflecting ends (22) on the mounting surface of the portable imaging device (3) are splayed.

7. The portable imaging module of claim 1 or 2, wherein the projection area of the reflecting end (22) on the mounting surface of the portable imaging device (3) is an arc-shaped strip.

8. The portable imaging module of claim 1 or 2, wherein the projection area of the reflecting end (22) on the mounting surface of the portable imaging device (3) is a horizontal strip, and an extended line of the horizontal strip passes through the lens assembly (1).

9. The portable imaging module of claim 1 or 2, wherein the lens body (2) comprises two retractable parts, and the lens assembly (1) and the reflecting end (22) are respectively disposed on the two retractable parts.

10. The portable imaging module of claim 1 or 2, wherein the lens body (2) comprises a specular reflection enhancement layer or diffuse reflection enhancement layer; the specular reflection enhancement layer or diffuse reflection enhancement layer is at least disposed on the reflecting end (22); and the specular reflection enhancement layer or diffuse reflection enhancement layer is further disposed at least on part of other regions of the lens body.
